# EUROPEAN PATENT SPECIFICATION

(11) **EP 1 647 385 B1**
(45) Date of publication and mention of the grant of the patent: **24.03.2010**
(21) Application number: 04747838.3
(22) Date of filing: 15.07.2004
(51) Int. Cl.: B29C 45/14, B29C 45/27, C12N 5/00

(54) **IN-MOLD DECORATED MOLDED PRODUCT AND METHOD OF MANUFACTURING THE SAME**
IN DER FORM VERZIERTES GEFORMTES PRODUKT UND VERFAHREN ZUR HERSTELLUNG DESSELBEN
PRODUIT MOULE DECORE DANS LE MOULE ET PROCEDE DE FABRICATION DE CE PRODUIT

(30) Priority: 18.07.2003 JP 2003277016
(43) Date of publication of application: 19.04.2006
(73) Proprietor: NISSHA PRINTING CO., LTD., Nakagyo-ku Kyoto-shi Kyoto 604-8551 (JP)
(72) Inventor: Hamano, Koji, Nissha Printing Co., Ltd., Kyoto, 6048551 (JP); Toyooka, Naoto, Nissha Printing Co., Ltd., Kyoto, 6048551 (JP)
(74) Representative: HOFFMANN EITLE
(86) International application number: PCT/JP2004/010449
(87) International publication number: WO 2005/007380

(56) References cited:
- DE-A1- 19 809 753
- JP-A- 60 250 927
- JP-A- 2000 334 768
- JP-A- 2003 039 480
- JP-A- 2003 080 557

## Description

### Technical Field

The present invention relates to an in-mold decorated molded article and a manufacturing method for in-mold decorated molded articles.

### Background Art

An in-mold decorating method is a method in which a decorative sheet providing a decorative layer on a base sheet is arranged between first mold and second mold of a injection mold, a molding resin is injected into a space for molding which is formed by closing of the first mold and the second mold so as to form a molded article, and at the same time the decorative layer is laminated onto the surface of the molded article in one body.

And in recent years, an in-mold decorating method has attracted attention in which a decorative layer is provided on not one side but both sides of a molded resin body, owing to the need to enhance the design property and improve the surface properties of the molded resin, as disclosed in Japanese unexamined patent publication No. H06-99457. In such an in-mold decorating method, a first decorative sheet and a second decorative sheet being arranged in both a first mold and a second mold of an injection mold, and a molding resin is generally injected from a side gate.

In this in-mold decorating method, however, a space for molding is surrounded and covered by the first decorative sheet and the second decorative sheet, so that air generated at the time of injection molding is not completely removed with the result that sink marks and air sumps tend to be generated. Defects in molding such as ink running tend to be generated because an ink layer is provided on both sides of a molded article. Therefore, the size of a gate needs to be considerably increased to prevent these defects during molding.

However, as the gate is made larger, gate cutting becomes more difficult with the result that the gate mark treatment required to achieve an agreeable appearance is also made more difficult. When a transparent molding resin is employed, a side gate mark of unacceptable appearance is visible from the surface of the molded article, with the result that the design property deteriorates despite the original intent.

Also in this in-mold decorating method, the side face of the molded article requires inclination to the surface of the molded article and the molded article requires rounded corners to prevent film breakage and ink cracks on the first decorative sheet and the second decorative sheet. Accordingly, when a side gate mark remains in evidence on the molded article, the side gate mark tends to be visible from the surface of the molded article.

JP 2003-039480 discloses an in-mold decorated molded article according to the preamble of claim 1.

A general object of the invention is to provide an in-mold decorated molded article which design property is maintained.

Accordingly, the inventor has made the following invention to solve the above issues.

In accomplishing this object, according to the present invention, there is provided an in-mold decorated molded article, comprising: the features of claim 1.

Preferred optional features are recited on the dependent claims.

According to the in-mold decorated molded article of the present invention, even when a transparent molding resin is employed with the result that an agreeable appearance of a side gate mark is not achieved despite of a treatment thereof, the design property can be maintained, since a side gate mark of unacceptable appearance is not seen from the top surface of the molded article. In addition, according to the manufacturing method of the in-mold decorated molded article of the present invention, the in-mold decorated molded article can be easily obtained.

Since the side gate mark is not seen from the top surface of the in-mold decorated molded article, the top surface of the molded article is of an acceptable appearance, even when an angle made between the cutting direction of the side gate and the thickness direction of the molded resin body is small, with the result that the side gate cutting process is simplified.

The in-mold decorated molded article is utilized for uses such as a resin panel of a mobile phone provided with a transparent window part. The side gate mark is made hardly visible from the surface of the in-mold decorated molded article by forming the side gate mark adjacent to the transparent window part.

### Brief Description Of Drawings

These and other aspects and features of the present invention will become clear from the following description taken in conjunction with the preferred embodiments thereof with reference to the accompanying drawings, in which:
Fig. 1 is a perspective view of an appearance of a panel equipped for a mobile phone as an example of use according to the in-mold decorated molded article of the present invention;
Fig. 2 is a cross sectional view showing an embodiment of the panel equipped for a mobile phone of Fig. 1, taken along II-II;
Fig. 3 is a cross sectional view showing an embodiment of the panel equipped for a mobile phone of Fig. 1, taken along III-III;
Fig. 4 is a partially enlarged view of a side gate mark part of the panel equipped for a mobile phone of Fig. 1;
Fig. 5 is a partially enlarged sectional view of the panel equipped for a mobile phone of Fig. 2 and a side gate thereof before the side gate cutting according to the embodiment of the present invention;
Fig. 6A, Fig. 6B and Fig. 6C are respectively plane views of other modifications with respect to a position of a coating layer formed on the panel of Fig. 1;
Fig. 7 is a cross-sectional view of a first decorative sheet or a second decorative sheet according to one embodiment of the present invention;
Fig. 8 is a cross-sectional view of the first decorative sheet or the second decorative sheet according to another embodiment of the present invention;
Fig. 9 is a view conceptually showing an in-mold decorating method according to one embodiment of the present invention in the state that a movable mold and a stationary mold are closed;
Fig. 10 is a cross-sectional view conceptually showing an in-mold decorating method according to one embodiment of the present invention in the state that a molding resin is injected through the side gate;
Fig. 11 is an across-sectional view of a movable mold of an injection mold for manufacturing the in-mold decorated molded article according to the present invention;
Fig. 12 is a cross-sectional view of a stationary mold of the injection mold for manufacturing the in-mold decorated molded article according to the present invention;
Fig. 13 is a sectional view of a side gate part of a panel equipped for a mobile phone of another embodiment;
Fig. 14 is a partially enlarged view of the panel equipped for a mobile phone of Fig. 13 and a side gate thereof before the side gate cutting and
Fig. 15 is a partially enlarged view of a side gate part of the panel equipped for a mobile phone of Fig. 13.

### Best Mode for Carrying Out the Invention

Before the description of the present invention proceeds, it is to be noted that like parts are designated by like reference numerals throughout the accompanying drawings.

Hereinbelow, an in-mold decorated molded article 10 according to one embodiment of the present invention is described. The in-mold decorated molded article 10 of the present invention is provided with a coating layer 3 formed at an edge part of at least top surface 1a of a transparent molded resin body 1, thereby concealing a side gate mark 2 in order for the side gate mark 2 not to be seen from top surface 1a of the transparent molded resin body 1. On a bottom surface 1b of the transparent molded resin body 1, a decorative layer 4 is formed.

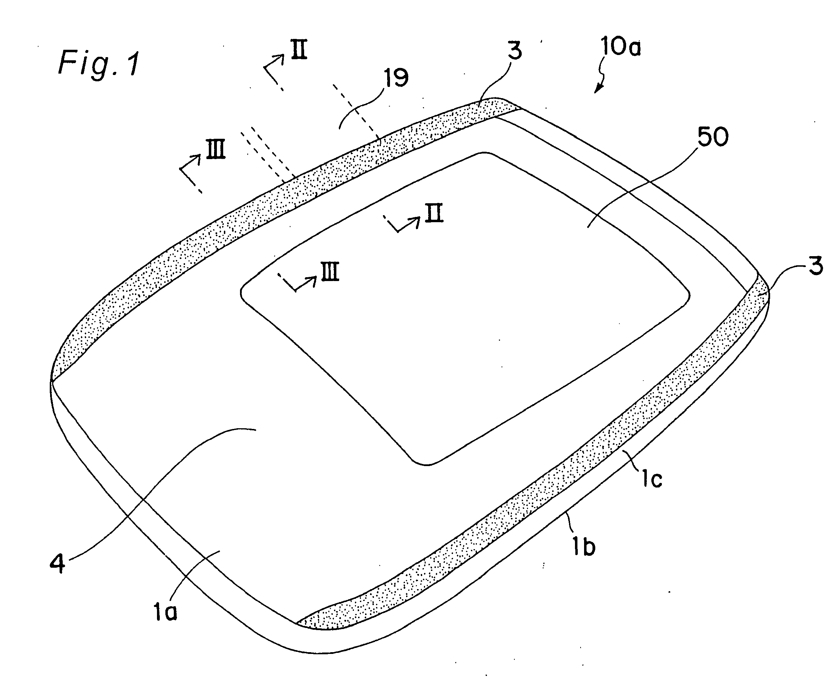

For example as shown in Fig. 1 the in-mold decorated molded article 10 is employed for uses including a screen panel of a mobile phone having a transparent window part. In the present embodiment, the panel 10a equipped for a mobile phone as the in-mold decorated molded article 10 is described.

The transparent molded resin for using the panel 10a equipped for a mobile phone is made up of a molding resin such as an acrylic resin, an acrylonitrile styrene resin, an acrylonitrile-butadiene-styrene resin, a polycarbonate resin, a polypropylene resin, a polylactic acid resin, a polystyrene resin, a polyethylene resin, and a polymer alloy made up of a selection of the above molding resins.

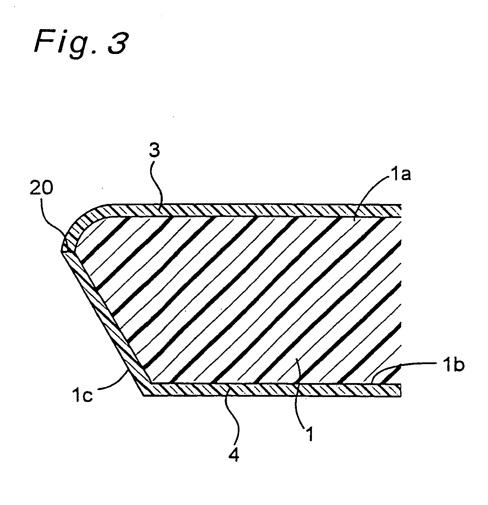

The in-mold decorated molded article 10 includes a molded resin body 1 which is a planar body flattened in the thickness direction and a side gate mark formed by cutting the part of a side gate resin formed on the side face of the molded resin body, and a coating layer 3 and a decorative layer 4 which are respectively formed on a top surface 1a and a lower face 1b of the molded resin body 1. The side face 1c of the molded resin body 1 is inclined at the angle lower than approximately 60° to the thickness direction, and an edge part between the side face 1c and the top surface 1a, a bottom surface 1b are respectively rounded (see Fig. 3). The reason the side face 1c of the molded resin body 1 is formed with an inclination angle is to prevent film breakage and ink cracks caused by stretching the decorative sheet, when molding.

The decorative layer is formed on an entire surface of the molded resin body 1, and a non-coloring part at the center part of the decorative layer is formed as a transparent window part 50.

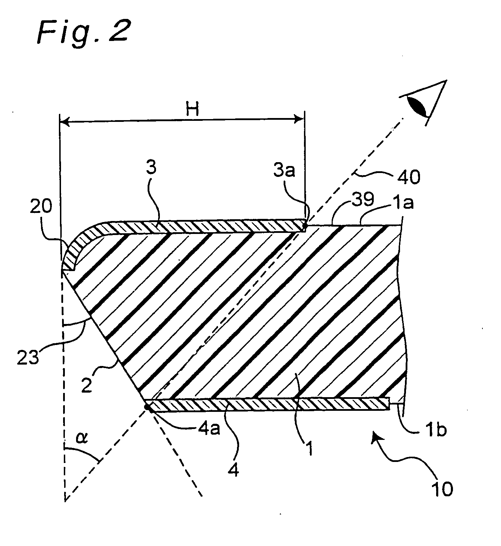

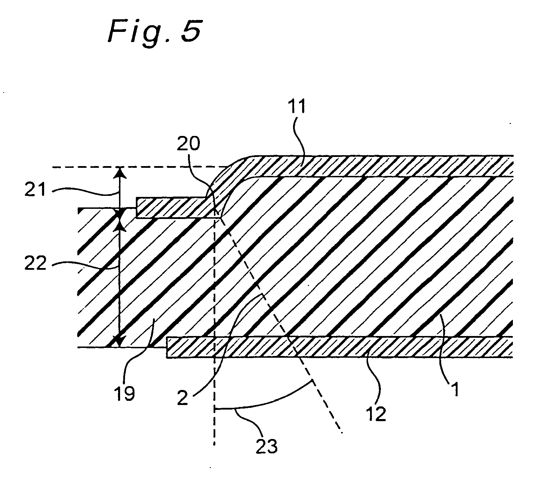

As shown in Fig. 5, since the in-mold decorated molded article 10 is molded by using two decorative sheet for transferring the coating layer 3 and the decorative layer 4, the in-mold decorated molded article 10 has a side gate part for injecting a resin into a space 17 for molding defining an outer shape of the in-mold decorated molded article 10. Therefore, a side gate resin molded part 19 is remained onto a solidified molding resin just taken out from the mold. In the present embodiment, the panel 10a equipped for a mobile phone is formed so that the side gate resin molded part 19 is positioned at a side part of the transparent windows part 50. The side gate resin molded part 19 is cut along the side face 1c of the transparent molded resin body 1 (see Fig. 2). That is, the side gate resin molded part 19 is cut at an angle of 0 - 60° to the thickness direction of the panel 10a so that the cutting face of the side gate resin molded part 19 is inclined.

As shown in Fig. 5, the transparent molded resin body 1 of the panel 10a has a thickness preferably equal to the thickness formed by a cross-section thickness 22 of the side gate 19 plus a ceiling plate thickness 21 of 0.2 to 2 mm. The reason the transparent molded resin body thickness is thicker than the cross-section thickness 22 by the ceiling plate thickness 21 is that when the coating layer 3 is provided using a first decorative sheet 11 as hereinafter described in detail, a difference in level is caused at an end part 20 of the molded article due to the thickness difference, with the result that the coating layer 3 is made scissile by the level difference (see Fig. 2). A base sheet 30 composing the first decorative sheet 11 on the coating layer 3 may be left unremoved. On the other hand, when the coating layer 3 is provided by direct printing, the thickness of the transparent molded resin body 1 may be equal to the cross-section thickness 22 of the side gate 19.

The side gate mark 2 has the cross-section thickness of 0.4 mm or more in the thickness direction of the molded resin, and an angle 23 made between the cross-section of the side gate mark 2 and the thickness direction of the molded resin body is 0 to 60°. The reason the cross-section thickness 22 is made 0.4 mm or more is to prevent defects in molding such as sink marks, shortage of an injected resin for filling, and ink flow. The reason an inclination angle 23 of 0 to 60° is made at the side gate mark is to make the side gate mark 2 hardly visible when the in-mold decorated molded article 10 is seen from the vicinity of the periphery of the end part 20 thereof, as well as to prevent film breakage and ink cracks caused by stretching the decorative sheet (see Fig. 2).

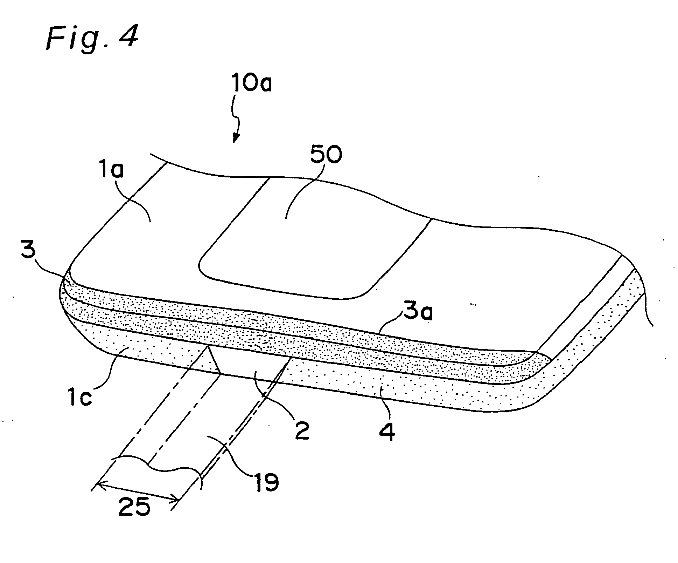

A shape 24 of the side gate mark 2 is not limited to a specific shape such as a square or circular shape. A width 25 of the side gate mark 2 may be suitably set according to a size of the in-mold decorated molded article 10 (see Fig. 4).

As described above, the coating layer 3 and the decorative layer 4 respectively on the top surface 1a and the bottom surface 1b of the molded resin body 1 are formed by an in-mold transfer. As shown in Fig. 3, the coating layer 3 is formed from the edge of top surface 1a of the molded resin body 1 to the side face 1c, and the decorative layer is formed from the bottom surface 1b of the molded resin body 1 to the side face 1c and to the side gate resin molded part 19 when just injected. Therefore, as shown in Fig. 4, the coating layer 3 and the decorative layer 4 are not formed on the side gate mark 2 formed by cutting of the side gate resin molded part 19, and the molded resin is exposed. Seeing from the direction of the side face of the molded resin body 1, the side gate mark can be seen clearly.

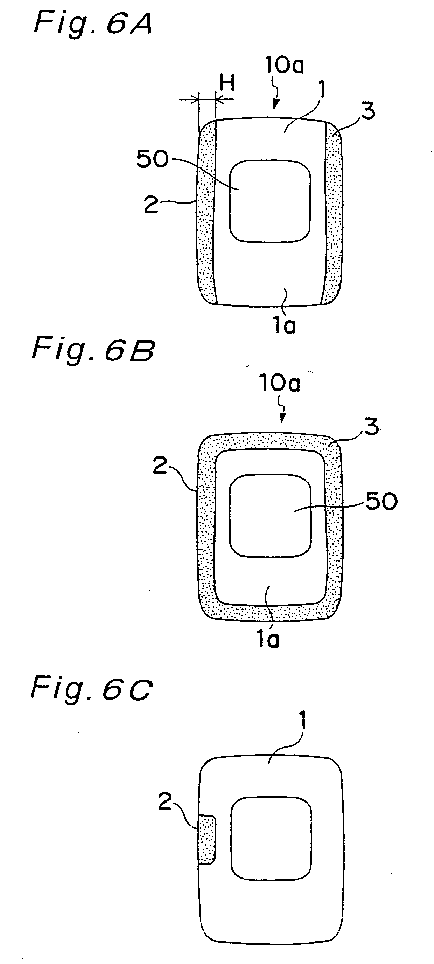

The coating layer 3 has a function to conceal the side gate mark 2 in order to make the side gate mark 2 hardly visible in the case where the in-mold decorated molded article 10 is seen from the upper part of the molded resin body 1. The coating layer 3 has such a size as to conceal the side gate mark 2. For example, as shown in Fig. 6A, the coating layer can be formed on an entire end part of the top surface adjacent to the side face with the side gate mark formed, and formed an entire end part of the molded resin body 1, i.e., the top surface adjacent to the side face with the side gate mark not formed as shown in Fig. 6B. And the coating layer can be formed on the vicinity part of the top surface with the side gate mark 2 formed as shown in Fig.6C. And the width thereof is equal to the width of the side gate mark or larger size than the side gate mark. That is, the width of coating is the size for concealing the side gate mark 2. The width H of the coating layer is preferably formed to extend from such a position 39 that the side gate mark is not seen at a slanting angle of 45° to upper side of the molded article, to the end part 20 of the molded article. Namely, the coating layer 3 is preferably formed within such a range that the angle α is 45° or more which is made between a virtual line 40 connecting the end part 3a of the coating layer 3 on a side away from a side face of the molded article to the end part 4a on the lower part of the side face 1c of the molded article, and the thickness direction of the molded resin body.

A major object for forming the pattern of the coating layer 3 is not limited to an object for decorating the panel 10a. Alternatively, the major object may be to conceal the side gate mark 2. The form pattern on the coating layer 3 is not limited to a satin pattern such as shown in Fig. 1. Alternatively, as the form pattern on the coating layer 3, it is possible to use the pattern on which the light incident to the coating layer 3 is scattered, such as an opaque color pattern, a translucent color pattern and a pattern for reflecting the light incident to the coating layer3 (for example, a hologram pattern or a metal film pattern, etc.). A form pattern on the decorative layer 4 is not limited to a specific one. For example, in the case that the color of the decorative layer 4 is the same as the coating layer, the coating layer is hardly seen from viewing an upper side of the panel 10.

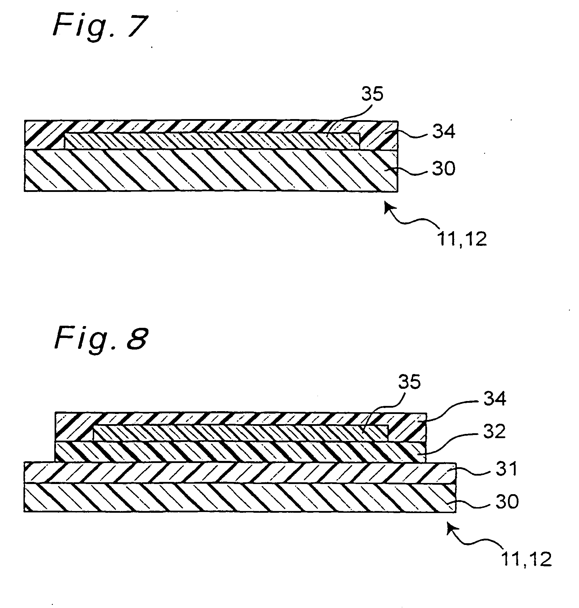

To form the coating layer 3 or the decorative layer 4 on the transparent molded resin body 1, an insert molding method is employed which uses a first decorative sheet 11 and a second decorative sheet 12. As shown in Fig. 7, examples of the first decorative sheet 11 and the second decorative sheet 12 include laminated layers superimposed by a transfer layer 35 for forming layers including the coating layer 3 or the decorative layer 4 or the like; an adhesive layer 34; and the like in order, on the base sheet 30. These layers are formed on the molded resin body 1 as they are. When the transfer layer 35 has an adhesive property, the adhesive layer 34 may be omitted.

Examples of methods to form the coating layer 3 and the decorative layer 4 on the transparent molded resin body 1 include an in-mold transfer method using the decorative sheet 11, 12 as a transfer material. As shown in Fig. 8, one example of the transfer material includes laminated layers superimposed by the transfer layer 35 for forming a release layer 31, a peel layer 32, the coating layer 3, the decorative layer 4, and the like; and the adhesive layer 34 in order, on the base sheet 30. After the layers are bonded onto the molded resin body 1, from which the base sheet 30 and the release layer 31 are peeled and removed. The laminated layers superimposed by the peel layer 32, the transfer layer 35, and the adhesive layer 34 are formed on the molded resin body 1.

When the base sheet 30 has a releasing property, the release layer 31 may be omitted. When the transfer layer 35 has a peeling property, the peel layer 32 may be omitted. When the transfer layer 35 has an adhesive property, the adhesive layer 34 may be omitted.

Examples of preferable materials for the base sheet 30 include a polyester-based resin, a vinyl chloride-based resin, an acrylic-based resin, a polycarbonate-based resin, a polypropylene-based resin, a polyethylene-based resin, a polyurethane-based resin, a polystyrene-based resin, an acetate-based resin, a polyamide-based resin, and the like.

The thickness of the base sheet 30 is preferably 5 µm to 5 mm. When the base sheet is thinner than 5 µm, the sheet 30 does not have enough rigidity to support a protruded part layer 2. When the sheet is thicker than 5 mm, the rigidity thereof is so strong that the base sheet 30 is difficult to handle.

To form the base sheet 30, general-purpose film forming methods such as extrusion molding, calender molding, and casting may be employed. On a surface of the base sheet 30 of the side on which a printed layer is formed, the easy adhesive treatment such as corona discharge treatment, plasma treatment, easy-adhesive primer coat treatment, or the like may be previously carried out as required.

Examples of materials for the release layer 32 include a melamine-based resin, a silicone-based resin, a fluorine-based resin, an alkyd-based resin, and a phenolic-based resin, among which a suitable material is chosen according to the releasing property from the peel layer.

The thickness of the release layer 31 is preferably 0.5 µm to 50 µm. When the release layer is thinner than 0.5 µm, the layer does not have enough releasing property. When the layer 31 is thicker than 50 µm, the layer 31 does not dry quickly after printing.

To form the release layer 31, printing methods such as gravure printing, offset printing, and screen-printing; or other methods such as painting, dip coating, and reverse coater may be employed.

Examples of materials for the peel layer 32 include an acrylic-based resin, a vinyl-based resin, a urethane-based resin, a polyester-based resin, a polypropylene-based resin, a polyethylene-based resin, a polystyrene-based resin, a polycarbonate-based resin, a polyvinyl alcohol-based resin, an acetate-based resin, and a polyamide-based resin, from among which a suitable material is chosen according to the releasing property from the release layer.

The thickness of the peel layer 32 is preferably 0.5 µm to 50 µm. When the peel layer is thinner than 0.5 µm, the layer 32 does not have enough releasing property. When the layer 32 is thicker than 50 µm, the layer 32 does not dry quickly after printing.

To form the peel layer 32, printing methods such as gravure printing, offset printing, and screen-printing; or other methods such as painting, dip coating, and reverse coater may be employed.

The transfer layer 35 is a layer on which patterns to be decorated such as grain patterns, stone grain patterns, cloth grain patterns, letters, geometrical patterns, and solid patterns, satin patterns are formed. The transfer layer 35 of the first decorative sheet conceals the side gate mark 2 as the coating layer 3. A plurality of the transfer layer 35 may be formed in parallel. A metal film layer may be provided on the transfer layer 35 as required. In this case, the metal film layer may be provided either on the whole face of or in a pattern form on the transfer layer.

Examples of materials for the transfer layer 35 include a polyester-based resin, an acrylic-based resin, a vinyl-based resin, a nitrocellulose-based resin, a urethane-based resin, and a chlorinated rubber-based resin, but are not limited to specific materials. Examples of materials for the metal film layer include aluminum, chromium, copper, nickel, indium, tin, and oxide silicon, but are not limited to specific materials.

The thickness of the transfer layer 35 is preferably 0.5 µm to 50 µm. When the transfer layer 35 is thinner than 0.5 µm, the layer 35 does not have enough concealing property. When the layer 35 is thicker than 50 µm, the layer 35 does not dry quickly after printing. However, the thickness of the metal film layer is preferably 150 Å to 1200 Å. When the metal film layer is thinner than 150 Å, the layer does not have enough concealing property. When the layer is thicker than 1200 Å, cracks tend to be generated.

To form the transfer layer 35, printing methods such as gravure printing, offset printing, and screen-printing; or other methods such as painting, dip coating, and reverse coater may be employed. To form the metal film layer, methods such as vacuum deposition and plating may be employed.

Examples of materials for the adhesive layer 34 include an acrylic-based resin, a vinyl-based resin, a urethane-based resin, a polyester-based resin, a polypropylene-based resin, a polyethylene-based resin, a polystyrene-based resin, a polycarbonate-based resin, a polyvinyl alcohol-based resin, an acetate-based resin, and a polyamide-based resin, among which a suitable material is chosen according to the adhesive property to the molding resin.

The thickness of the adhesive layer 34 is preferably 0.5 µm to 10 µm. When the adhesive layer 34 is thinner than 0.5 µm, the layer 34 does not obtain satisfactory close sticking. When the layer 34 is thicker than 10µm, the layer 34 does not dry quickly after printing.

To form the adhesive layer 34, printing methods such as gravure printing, offset printing, and screen-printing; or other methods such as painting, dip coating, and reverse coater may be employed.

Other than the methods previously mentioned, the coating layer 3 and the decorative layer 4 may be fixed on the molded resin body 1 by direct printing or direct painting.

Next, a manufacturing method of the in-mold decorated molded article and an injection mold for manufacturing the in-mold decorated molded article according to the embodiment of the present invention is described.

The panel 10a is formed by holding the two decorative sheets between the two molds 15, 16 and the injecting a molten resin to the space 17 for molding defined between the two molds 15, 16 with two decorative sheets held therebetween. The molds for in-molding include the movable mold serving as one example of a first mold and the stationary mold serving as one example of a second mold. The movable mold is fixed on the movable base of an in-mold apparatus not shown and is moved so as to bring into contact with and separate from the stationary mold. The stationary mold is fixed on the stationary base of the in-mold apparatus not shown.

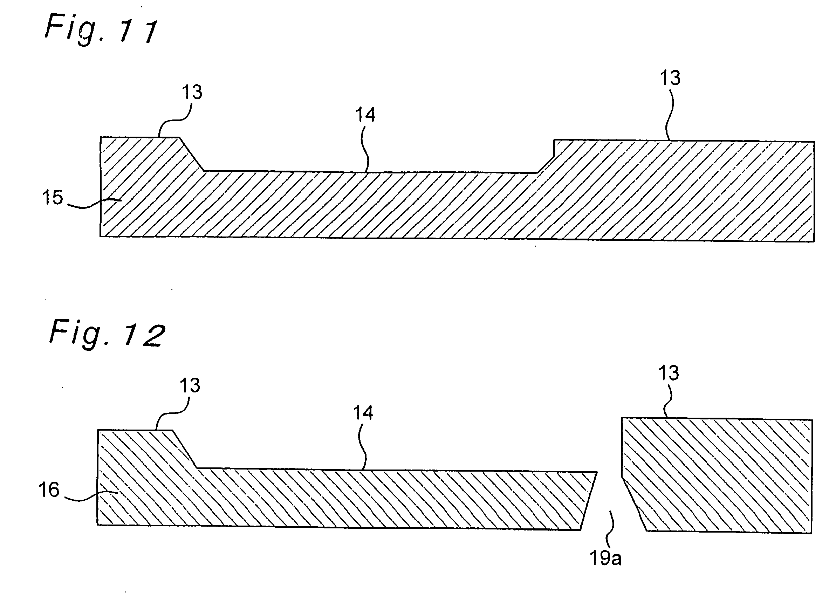

The movable mold 15 is formed in a square shape as has been conventionally done, the peripheral part of which has a reference face 13 for making direct contact with the stationary mold 16. As shown in Fig. 11, a recess part 14 is formed in an inside part surrounded by the reference face 13 according to the outline of the molded article.

On the other hand, the stationary mold 16 is formed in a square shape corresponding in the width and height to the movable mold 15, having a reference face 13 which is a plane making direct contact with the movable mold 15. As shown in Fig. 12, a recess part 14 is formed in an inside part surrounded by the reference face 13 according to the outline of the molded article.

The reference face 13 of the movable mold 15 and the reference face 13 of the stationary mold 16 are superimposed so as to come into contact with each other while holding the first decorative sheet 11 and the second decorative sheet 12 therebetween, in which the recess part 14 of the movable mold 15 corresponds to the recess part 14 of the stationary mold 16. The space 17 for molding is formed between the first decorative sheet 11 and the second decorative sheet 12, and a part of the recess part 14 of the stationary mold 16 becomes the side gate part 19a, through which the molding resin 18 is injected into the space 17 for molding.

The height, width, and thickness of the space 17 for molding correspond to a prescribed height, width, and thickness of the molded article. Thus, the in-mold decorated molded article 10 of a prescribed size can be obtained by injecting the molding resin 18 into the space 17 for molding and solidifying the resin 18.

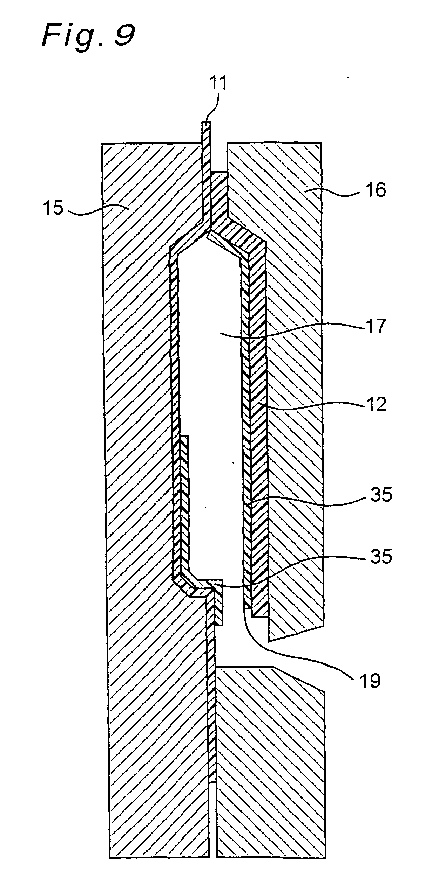

Namely, the first decorative sheet 11 is set on a movable mold side and a second decorative sheet 12 is set on a stationary mold side, between a pair of injection molds for in-molding decorating oppositely arranged, then the movable mold 15 and the stationary mold 16 are clamped (see Fig. 9). When the movable mold 15 and the stationary mold 16 are clamped, the transfer layer 35 of the first decorative sheet 11 is arranged at a boundary between the side gate of the molds 15, 16 and the space 17 for molding.

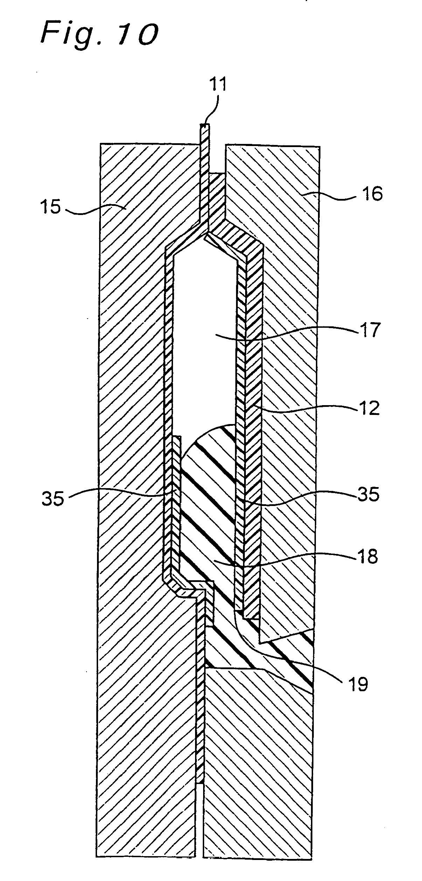

As shown in Fig. 10, then a molten molding resin 18 is injected from the side gate part 19a into the space 17 for molding, which is formed between the first decorative sheet 11 and the second decorative sheet 12. After the molten molding resin 18 has cooled and solidified, the movable mold 15 and the stationary mold 16 are opened to take out the in-mold decorated molded article 10 from the injection molds for in-molding decorating. In the molten molding resin 18 there are the panel 10a corresponding to the space 17 for molding and the side gate resin molded part 19 corresponding to the side gate part 19a integrally. And the transfer layer 35 of the first decorative sheet and the second decorative sheet is transferred on the outer part of the panel 10a.

Then, after the movable mold and the stationary mold 16 are opened to take out the solidified molding resin, the solidified molding resin at the side gate resin molded part 19 is cut. The solidified molding resin is cut in an angle of not more than 60° to the thickness direction of the molded article.

Next, the in-mold decorated molded article 10a according to another modification of the present invention is described.

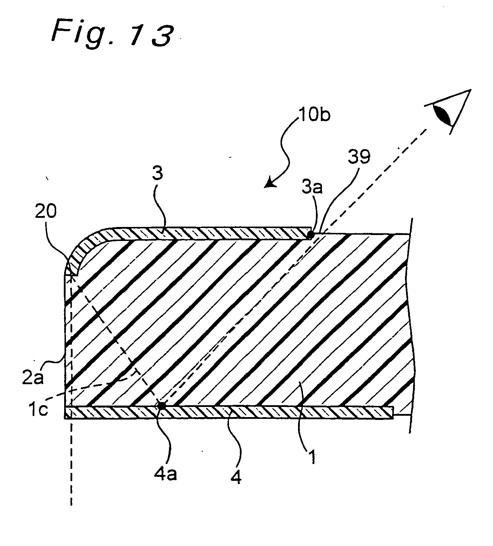

A panel 10b according to another modification has approximately the same configuration as the panel 10a of Fig. 1, and the direction of cutting of a side gate resin molded part 19 is different. In the panel 10b according to another modification, as shown in Fig. 13 the side gate resin molded part 19 is cut in the direction of the side face 1c of the panel 10b. The cutting process can be simplified by cutting at an angle close to the thickness direction of the in-mold decorated molded article 10b.

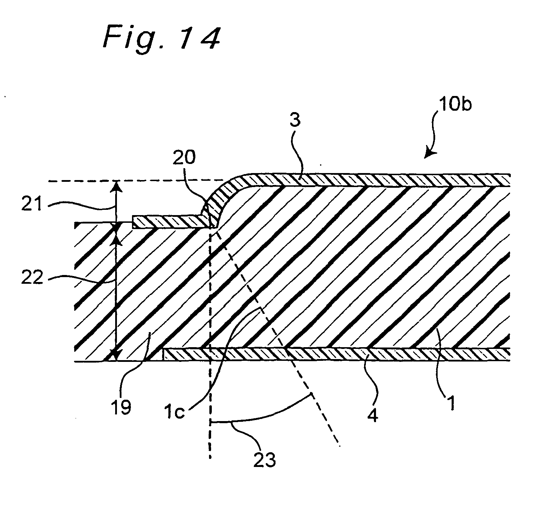

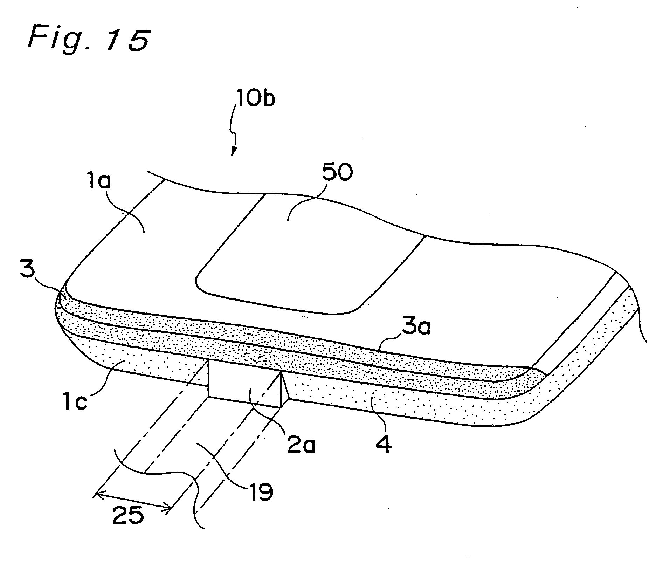

Namely, as shown in Fig. 14, the side gate resin melded part 19 attaching to the molded resin having taken out from the mold is cut in the direction to be not along the side face, the direction at an angle of 0° to the thickness direction of the panel 10b. The panel 10b which is cut in the above manner, as shown in Fig. 15, the side gate mark 2a is projected to the side face lc, but the side gate mark 2a is not seen from the top surface of the in-mold decorated molded article, since the coating layer is provided.

Namely, the side gate mark of the in-mold decorated molded article 10 according to the another modification is covered with the coating layer 3, with the result that the design property on the surface of the in-mold decorated molded article can be maintained without cutting the cross section of the side gate so as to be inclined along the side face of the in-mold decorated molded article 10.

### (Working Example 1)

A release layer made of melamine resins was formed on a base sheet made of a polyethylene terephthalate film having a thickness of 38 µm (pretreated for easy adhesive properties), and a vapor-deposited anchor layer was formed using an urethane resin-based two-pack curable type ink by a gravure printing method. After the heat treatment for 5 min. at 120°C, a pattern of a first transfer layer composed of an aluminum metal film of 600±50Å thickness was formed by a vacuum deposition method, and an adhesive layer made of a polyvinyl chloride acetate copolymer resin was formed by a gravure printing method, with the result that a first decorative sheet was obtained. A second decorative sheet on which a second transfer layer was formed was obtained in the similar process.

The first decorative sheet obtained was arranged in one of the molds so as to cover the end part of a molded article in the vicinity of the side gate part, and the second decorative sheet was arranged in the other of the molds. A molding resin made of an acrylonitrile butadiene styrene copolymer resin, which was injected into the molds, was cooled and solidified, so that an in-mold decorated molded article was obtained by peeling a base sheet after the first and second decorative sheets and the molding resin being integrated. The first transfer layer of the first decorative sheet was transferred on a part adjacent to the side face on which the side gate was provided as a coating layer for making a side gate mark hardly visible when the side gate mark was seen from the top surface of the in-mold decorated molded article.

The in-mold decorated molded article thus obtained had a transparent molded resin body of thickness of 1.1 mm, a cross-section thickness of the side gate mark of 0.8 mm, a ceiling plate thickness of 0.3 mm, a cross-sectional inclination angle of the side gate mark of 35°, the side gate mark in a square shape, and a width of the side gate mark of 10.0 mm.

A form pattern on the coating layer was formed within 5.0 mm from the end part of the molded article so as to conceal the side gate mark. The side gate mark of the in-mold decorated molded article was not seen even from a slanting angle.

### (Working Example 2)

A pattern of a first transfer layer was formed on an acrylic film having a thickness of 125 µm using an acrylic resin-based ink by a gravure printing method, and an adhesive layer made of vinyl chloride-vinyl acetate copolymer resin was formed by a gravure printing method, with the result that a first decorative sheet was obtained. A second decorative sheet on which a second transfer layer was formed was obtained in the similar process.

The first decorative sheet obtained was arranged in one of the molds so as to cover the end part of a molded article in the side gate part, and the second decorative sheet was arranged in the other of the molds. A polycarbonate molding resin was injected into the molds and was cooled and solidified, so that an in-mold decorated molded article was obtained by integrating the first and second decorative sheets and the molding resin. The first transfer layer of the first decorative sheet was transferred on a part adjacent to the side face on which the side gate was provided as a coating layer for making a side gate mark hardly visible when the side gate mark was seen from the surface of the in-mold decorated molded article.

The in-mold decorated molded article thus obtained had a transparent molded resin body of thickness of 1.4 mm, a cross-section thickness of the side gate mark of 1.1 mm, a ceiling plate thickness of 0.3 mm, a cross-sectional inclination angle of the side gate mark of 10°, the side gate mark in an elliptical shape, and a width of the side gate mark of 15.0 mm.

A form pattern on the coating layer was formed within 4.5 mm from the end part of the molded article so as to conceal the side gate mark. The side gate mark of the in-mold decorated molded article was not seen even from a slanting angle.

The in-mold decorated molded article of the present invention can be utilized for uses including upper and lower lids of a mobile phone, surface and exterior components of an electronic toy device, a panel equipped for an input part of a rice cooker, interior and exterior panels for an automobile, and an outer frame of a pachinko stand.

By properly combining the arbitrary embodiments of the aforementioned various embodiments, the effects possessed by the embodiments can be produced.

Although the present invention has been fully described in connection with the preferred embodiments thereof with reference to the accompanying drawings, it is to be noted that various changes and modifications are apparent to those skilled in the art. Such changes and modifications are to be understood as included within the scope of the present invention as defined by the appended claims unless they depart therefrom.

## Claims

1. An in-mold decorated molded article, comprising:
a transparent molded resin body (1) which is flattened in a thickness direction of the molded resin body and includes at least a side face (1c) on which a side gate mark (2, 2a) is formed;
a coating layer (3) which is formed on a top surface (1a) of the transparent molded resin body (1), for covering an edge part of the top surface adjacent to the side face (1c) of the molded resin body with the side gate mark (2, 2a) formed, in order for the side gate mark not to be seen from the top surface of the molded resin body; and
a decorative layer (4) which is formed on a bottom surface (1b) of the molded resin body (1), **characterized in that** the decorative layer (4) has a larger area than the coating layer.

2. The in-mold decorated molded article as set forth in claim 1, wherein a thickness of the side gate mark (2, 2a) in the thickness of the molded resin body is 0.4 mm or more, and an angle made between a cross-section of the side gate mark (2, 2a) and the thickness direction of the molded resin body is 0 to 60°.

3. The in-mold decorated molded article as set forth in claim 1, wherein the coating layer (3) is formed on an entire surface of the edge part of the top surface adjacent to the side face (1c) on which the side gate mark (2, 2a) is formed.

4. The in-mold decorated molded article as set forth in claim 1, wherein the coating layer (3) is formed to have a width along the side face which is approximately equal to a size of the side gate mark (2, 2a) along the side face.

5. The in-mold decorated molded article as set forth in claim 1, wherein in a cross section along the thickness direction of the side face and a perpendicular direction of the side face of the molded resin body (1), the coating layer (3) covers the edge part of the top surface of the molded resin body, in order for the side gate (2, 2a) mark not to be seen from the top surface of the molded resin body so that an angle is 45° or more, which is made between a virtual line (40) connecting an end part (3a) of the coating layer away from the side face (1c) to a lower end (4a) part of the side face, and the thickness direction of the molded resin body (1).

6. The in-mold decorated molded article as set forth in claim 1, wherein the molded resin body (1) is a resin panel provided with a display screen part (50), and the side gate mark (2, 2a) is formed adjacent to the display screen part (50).

7. A manufacturing method of an in-mold decorated molded article comprising:
arranging a first decorative sheet (11) provided with at least a first transfer layer (35), at a boundary between a side gate (19a) and a space for molding (17), in a first mold (15) of an injection mold and arranging a second decorative sheet (12) provided with at least a second transfer layer (35) which has larger area than the first transfer layer, in a second mold (16) of the injection mold;
forming the space for molding (17) by closing of the first mold (15) and the second mold (16), thereafter injecting a molding resin into the space for molding (17) through the side gate (19a) to form the injection-molded article and at the same time integrally bonding the first decorative sheet (11) and second decorative sheet (12) onto a surface of the molded article so that the first transfer layer (35) and the second transfer layer (36) are transferred on the surface of the injection-molded article, and
taking out the in-mold decorated molded article from the first mold (15) and the second mold (16), and cutting the injected resin (19) formed by the side gate (19a) in an angle of less than 60° to a thickness direction of the injection-molded article to obtain the in-mold decorated molded article.

8. The manufacturing method of the in-mold decorated molded article as set forth in claim 7, wherein the injected resin is cut in an angle of approximate 0° to the thickness direction of the injection-molded article.

## Patentansprüche

1. In der Form verzierter, geformter Gegenstand, umfassend:
einen transparenten geformten Harzkörper (1), der in einer Dickenrichtung des geformten Harzkörpers abgeflacht ist und zumindest eine Seitenfläche (1c) aufweist, an der eine Seitenanschnittsmarkierung (2, 2a) ausgebildet ist,
eine Beschichtungslage (3), die an einer Oberseitenfläche (1a) des transparenten geformten Harzkörpers (1) ausgebildet ist, um einen zur Seitenfläche (1c) des geformten Harzkörpers mit der ausgebildeten Seitenanschnittsmarkierung benachbarten Kantenteil der Oberseitenfläche abzudecken, damit die Seitenanschnittsmarkierung von der Oberseitenfläche des geformten Harzkörpers nicht zu sehen ist, und
eine Verzierlage (4), die an einer Unterseitenfläche (1b) des geformten Harzkörpers (1) ausgebildet ist, **dadurch gekennzeichnet, dass** die Verzierlage (4) ein größeres Gebiet aufweist als die Beschichtungslage.

2. In der Form verzierter, geformter Gegenstand gemäß Anspruch 1, bei dem eine Dicke der Seitenanschnittsmarkierung (2, 2a) in der Dicke des geformten Harzkörpers 0.4 mm oder mehr beträgt, und ein zwischen dem Querschnitt der Seitenanschnittsmarkierung (2, 2a) und der Dickenrichtung des geformten Harzkörpers hergestellter Winkel 0 bis 60° beträgt.

3. In der Form verzierter, geformter Gegenstand gemäß Anspruch 1, bei dem die Beschichtungslage (3) an einer gesamten Fläche des zur Seitenfläche (1c) benachbarten Kantenteils der Oberseitenfläche ausgebildet ist, an der die Seitenanschnittsmarkierung (2, 2a) ausgebildet ist.

4. In der Form verzierter, geformter Gegenstand gemäß Anspruch 1, bei dem die Beschichtungslage (3) eine Breite entlang der Seitenfläche aufweist, die ungefähr gleich einer Größe der Seitenanschnittsmarkierung (2, 2a) entlang der Seitenfläche ist.

5. In der Form verzierter, geformter Gegenstand gemäß Anspruch 1, bei dem in einem Querschnitt entlang der Dickenrichtung der Seitenfläche und einer senkrechten Richtung der Seitenfläche des geformten Harzkörpers (1) die Beschichtungslage (3) den Kantenteil der Oberseitenfläche des geformten Harzkörpers abdeckt, damit die Seitenanschnittsmarkierung (2, 2a) von der Oberseitenfläche des geformten Harzkörpers nicht zu sehen ist, so dass ein Winkel 45° oder mehr ist, der zwischen einer einen von der Seitenfläche (1c) entfernten Endteil (3a) der Beschichtungslage mit einem unteren Endteil (4a) der Seitenfläche verbindenden virtuellen Linie (40) und der Dickenrichtung des geformten Harzkörpers (1) hergestellt ist.

6. In der Form verzierter, geformter Gegenstand gemäß Anspruch 1, bei dem der geformte Harzkörper (1) ein mit einem Anzeigebildschirmteil (50) versehenes Harzpaneel ist, und die Seitenanschnittsmarkierung (2, 2a) benachbart zum Anzeigebildschirmteil (50) ausgebildet ist.

7. Herstellungsverfahren eines in der Form verzierten geformten Gegenstands, umfassend:
Anordnen einer mit zumindest einer ersten Übertragungslage (35) versehenen ersten Verzierfolie (11) an einer Grenze zwischen einem Seitenanschnitt (19a) und einem Raum zum Ausformen (17) in einer ersten Form (15) einer Spritzgussform, und Anordnen einer mit zumindest einer zweiten Übertragungslage (35), die ein größeres Gebiet aufweist als die erste Übertragungslage, versehenen zweiten Verzierfolie (12) in einer zweiten Form (16) der Spritzgussform,
Ausbilden eines Raums zum Ausformen (17) durch Verschließen der ersten Form (15) und der zweiten Form (16), hiernach Einspritzen eines Formharzes in den Raum zum Ausformen (17) durch den Seitenanschnitt (19a), um den spritzgussgeformten Gegenstand auszubilden, und zu der Zeit integrales Anbinden der ersten Verzierfolie (11) und der zweiten Verzierfolie (12) auf eine Fläche des geformten Gegenstands, so dass die erste Übertragungslage (35) und die zweite Übertragungslage (35) an die Fläche des spritzgussgeformten Gegenstands übertragen werden, und
Herausnehmen des in der Form verzierten geformten Gegenstands aus der ersten Form (15) und der zweiten Form (16), und Schneiden des durch den Seitenanschnitt (19a) ausgebildeten, eingespritzten Harzes (19) in einem Winkel von weniger als 60° zu einer Dickenrichtung des spritzgussgeformten Gegenstands, um den in der Form verzierten geformten Gegenstand zu erhalten.

8. Herstellungsverfahren des in der Form verzierten geformten Gegenstands gemäß Anspruch 7, bei dem das eingespritzte Harz in einem Winkel von ungefähr 0° zur Dickenrichtung des spritzgussgeformten Gegenstands geschnitten wird.

## Revendications

1. Article moulé décoré dans le moule, comprenant :
un corps de résine moulé transparent (1) qui est aplani dans une direction d'épaisseur du corps de résine moulé et inclut au moins une face latérale (1c) sur laquelle une trace de la carotte latérale (2, 2a) est formée ;
une couche de revêtement (3) qui est formée sur une surface supérieure (1a) du corps de résine moulé transparent (1), pour couvrir une partie de bord de 1a surface supérieure adjacente à la face latérale (1c) du corps de résine moulé avec 1a trace de la carotte latérale (2, 2a) formée, afin que la trace de la carotte latérale ne soit pas vue depuis 1a surface supérieure du corps de résine moulé ; et
une couche décorative (4) qui est formée sur une surface inférieure (1b) du corps de résine moulé (1), **caractérisée en ce que** la couche décorative (4) a une plus grande surface que la couche de revêtement.

2. Article moulé décoré dans le moule selon la revendication 1, dans lequel une épaisseur de la trace de la carotte latérale (2, 2a) dans l'épaisseur du corps de résine moulé est de 0,4 mm ou plus, et un angle réalisé entre une section transversale de la trace de la carotte latérale (2, 2a) et la direction d'épaisseur du corps de résine moulé est de 0 à 60°.

3. Article moulé décoré dans le moule selon la revendication 1, dans lequel la couche de revêtement (3) est formée sur une surface entière de la partie de bord de la surface supérieure adjacente à la face latérale (1c) sur laquelle la trace de la carotte latérale (2, 2a) est formée.

4. Article moulé décoré dans le moule selon la revendication 1, dans lequel la couche de revêtement (3) est formée pour avoir une largeur le long de la face latérale qui est approximativement égale à une taille de la trace de la carotte latérale (2, 2a) le long de la face latérale.

5. Article moulé décoré dans le moule selon la revendication 1, dans lequel dans une section transversale le long de la direction d'épaisseur de la face latérale et d'une direction perpendiculaire de la face latérale du corps de résine moulé (1), la couche de revêtement (3) couvre la partie de bord de la surface supérieure du corps de résine moulé, afin que la trace de la carotte latérale (2, 2a) ne soit pas vue depuis la surface supérieure du corps de résine moulé de sorte qu'un angle fait 45° ou plus, lequel est réalisé entre une ligne virtuelle (40) reliant une partie d'extrémité (3a) de la couche de revêtement loin de la face latérale (1c) jusqu'à une partie d'extrémité inférieure (4a) de la face latérale, et la direction d'épaisseur du corps de résine moulé (1).

6. Article moulé décoré dans le moule selon la revendication 1, dans lequel le corps de résine moulé (1) est un panneau de résine muni d'une partie formant écran d'affichage (50), et la trace de la carotte latérale (2, 2a) est formée de manière adjacente à la partie formant écran d'affichage (50).

7. Procédé de fabrication d'un article moulé décoré dans le moule comprenant :
l'agencement d'une première feuille décorative (11) munie d'au moins une première couche de transfert (35), au niveau d'une frontière entre un orifice de coulée latéral (19a) et un espace pour moulage (17), dans un premier moule (15) d'un moule à injection et l'agencement d'une seconde feuille décorative (12) munie d'au moins une seconde couche de transfert (35) qui a une surface plus grande que la première couche de transfert, dans un second moule (16) du moule à injection ;
la formation de l'espace pour moulage (17) en fermant le premier moule (15) et le second moule (16), en injectant après cela une résine de moulage dans l'espace pour moulage (17) à travers l'orifice de coulée latéral (19a) pour former l'article moulé par injection et en même temps la liaison d'un seul tenant de la première feuille décorative (11) et de la seconde feuille décorative (12) sur une surface de l'article moulé de sorte que la première couche de transfert (35) et la seconde couche de transfert (36) sont transférées sur la surface de l'article moulé par injection, et
l'enlèvement de l'article moulé décoré dans le moule depuis le premier moule (15) et le second moule (16), et la coupe de la résine injectée (19) formée par l'orifice de coulée latéral (19a) à un angle de moins de 60° par rapport à une direction d'épaisseur de l'article moulé par injection pour obtenir l'article moulé décoré dans le moule.

8. Procédé de fabrication de l'article moulé décoré dans le moule selon la revendication 7, dans lequel la résine injectée est coupée à un angle d'environ 0° par rapport à la direction d'épaisseur de l'article moulé par injection.
